# EUROPÄISCHE PATENTSCHRIFT

(11) **EP 2 519 431 B1**
(45) Veröffentlichungstag und Bekanntmachung des Hinweises auf die Patenterteilung: **22.04.2015**
(21) Anmeldenummer: 10778975.2
(22) Anmeldetag: 05.11.2010
(51) Int. Cl.: B60T 8/36, F16K 27/00, F16K 31/06

(54) **VENTILANORDNUNG**
VALVE ASSEMBLY
ENSEMBLE VANNE

(30) Priorität: 29.12.2009 DE 102009060729
(43) Veröffentlichungstag der Anmeldung: 07.11.2012
(73) Patentinhaber: Robert Bosch GmbH, 70442 Stuttgart (DE)
(72) Erfinder: KURZ, Edgar, Heilbronn-Horkheim 74081 (DE); KRATZER, Dietmar, 71732 Tamm (DE)
(86) Internationale Anmeldenummer: PCT/EP2010/066861
(87) Internationale Veröffentlichungsnummer: WO 2011/079992

(56) Entgegenhaltungen:
- WO-A1-02/12039
- WO-A1-97/28391
- WO-A1-2007/033855

## Beschreibung

Die Erfindung betrifft eine Ventilanordnung mit einem Ventil, insbesondere Magnetventil, das ein mindestens zweiteiliges Gehäuse aufweist, welches eine erste Gehäusehülse und eine zweite Gehäusehülse besitzt, wobei die Gehäusehülsen durch Verpressen einer Befestigungszone aneinander gehalten sind, und mit einer Ventilaufnahme, in die das Ventil eingesetzt und mittels eines im Bereich der Befestigungszone liegenden Einpressrings gehalten ist.

### Stand der Technik

Ventilanordnungen der gattungsgemäßen Art sind beispielsweise aus der WO 02/12039 A1 bereits bekannt. Sie werden insbesondere für hydraulische Steuer- und Regelzwecke beispielsweise in Bremskreisläufen von Kraftfahrzeugen eingesetzt. Das Ventil weist hierbei ein mindestens zweiteiliges Gehäuse auf, wobei die Gehäuseteile als Gehäusehülsen ausgebildet und zu ihrer Verbindung miteinander in einer Befestigungszone verpresst sind. Insbesondere bei stromlos geschlossenen Magnetventilen ist diese Ausführungsform zur sicheren und preisgünstigen Herstellung geläufig. Die erste Gehäusehülse weist hierzu einen abgesetzten Kragen auf, der radial mit der Außenwandung der zweiten Ventilhülse verpresst wird. Daran ist nachteilig, dass bei der Montage solcher Ventile durch Einpressen in eine Ventilaufnahme zur Erzielung einer Ventilanordnung eine Krafteinleitung über den abgesetzten Kragen erfolgt, der in der Befestigungszone die zweite Ventilhülse übergreift. Hierdurch können in ungünstigen Fällen zuvor voreingestellte Kennwerte und Spezifikationen des Ventils erstellt werden, da es bei ungünstiger Krafteinleitung zu plastischen Verformungen im Bereich des abgesetzten Kragens der ersten Ventilhülse kommen kann. Eine vorausschauende Berücksichtigung solcher durch Krafteinleitung beim Verpressen des Ventils in die Ventilaufnahme möglichen Verformungen ist praktisch nicht möglich, da die von Ventil zu Ventil aufzuwendende Einpresskraft sehr erheblich und im Bereich mehrerer Kilonewton schwanken kann.

Eine Ventilanordnung mit den Merkmalen des Oberbegriffes des Anspruchs 1, wobei der Einpressring radial an der ersten Gehäusehülse anliegt, ist aus der WO 2007/033855A1 bekannt.

### Offenbarung der Erfindung

Diese Nachteile werden mit der vorgeschlagenen Ventilanordnung vorteilhaft vermieden. Es wird eine Ventilanordnung mit einem Ventil vorgeschlagen, insbesondere mit einem Magnetventil, das ein mindestens zweiteiliges Gehäuse aufweist, welches eine erste Gehäusehülse und eine zweite Gehäusehülse besitzt, wobei die Gehäusehülsen durch Verpressen einer Befestigungszone aneinander gehalten sind, und mit einer Ventilaufnahme, in die das Ventil eingesetzt und mittels eines im Bereich der Befestigungszone liegenden Einpressrings gehalten ist. Dabei ist vorgesehen, dass der Einpressring an der ersten Gehäusehülse radial und an der zweiten Gehäusehülse axial anliegt. Der Einpressring beaufschlagt demzufolge die zweite Gehäusehülse axial, die erste Gehäusehülse hingegen (nur) radial. Die Krafteinleitung auf die zweite Gehäusehülse erfolgt demzufolge nicht über die erste Gehäusehülse, sondern direkt durch das axiale Anliegen an der zweiten Gehäusehülse. Eine Materialbeanspruchung der ersten Gehäusehülse, insbesondere eine unerwünschte plastische Verformung, im Bereich des Anliegens des Einpressrings beziehungsweise durch die Krafteinleitung durch den Einpressring kann demzufolge nicht erfolgen. Die zur Anordnung des Ventils in der Ventilaufnahme aufzuwendende Kraft wird in Axialrichtung direkt auf die zweite Gehäusehülse aufgebracht.

In einer weiteren Ausführungsform ist vorgesehen, dass die zweite Gehäusehülse eine Axialringnut aufweist, in die die erste Gehäusehülse eingreift. Die zweite Gehäusehülse besitzt eine in Axialrichtung ausgebildete, in Richtung auf den zur Montage der Ventilanordnung anzulegenden Einpressring offene Axialringnut. In diese Axialringnut greift die erste Gehäusehülse ein. Anders als im Stand der Technik wird die zweite Gehäusehülse folglich nicht von mindestens einem Abschnitt der ersten Gehäusehülse außenseitig umgriffen. Die erste Gehäusehülse wird vielmehr mit ihrem offenen, der zweiten Gehäusehülse zugewandten Endbereich von der Axialringnut aufgenommen.

In einer bevorzugten Ausführungsform greift die erste Gehäusehülse mit einem nach außen weisenden Ringflansch oder mit einem nach außen gekehrten Krempelrand in die Axialringnut der zweiten Gehäusehülse ein. Hierzu weist die erste Gehäusehülse den Ringflansch auf, der nach außen gerichtet, also in Radialrichtung nach außen ausgebildet ist, oder den nach außen gekehrten Krempelrand, in dessen Bereich gewissermaßen eine Umkehrung der Materialverlaufsrichtung in rückwärtiger Richtung der ersten Gehäusehülse vorliegt, und der, im Schnitt betrachtet, in etwa eine nach oben offene Öse darstellt.

Bevorzugt ist vorgesehen, dass der Einpressring den Ringflansch oder den Krempelrand axial beaufschlagt. Auf diese Weise wird eine zusätzliche Sicherung von erster und zweiter Gehäusehülse gegen axiales Auseinandergleiten bewirkt. Zudem lässt sich über den Ringflansch oder, in besonders vorteilhafter Weise, über den nach außen gekehrten, vom Einpressring axial beaufschlagten Krempelrand eine Abdichtung der ersten und zweiten Gehäusehülse über den Einpressring bewirken. Diese Abdichtung wirkt zusätzlich zur Verpressung von erster und zweiter Gehäusehülse in der Befestigungszone. Insbesondere lässt sich der Krempelrand und/oder der Ringflansch mit der Tiefe der Axialringnut so abstimmen, dass bei Aufliegen des Einpressrings die erwünschte Dichtwirkung entsteht, beispielsweise durch eine die Axialringnut in ihrer Nutbreite ausfüllende, durch Axialbeaufschlagung über den Einpressring bewirkte Aufweitung des Krempelrandes. Insbesondere lässt sich auch sehr vorteilhaft die Tiefe der Ringnut auf die Materialstärke des Ringflansches abstimmen.

In einer weiteren Ausführungsform ist vorgesehen, dass der Einpressring auf einer einen Axialanschlag bildenden Stirnwand der zweiten Gehäusehülse aufliegt, wobei die Stirnwand zu einer Seitenwand der Axialringnut winklig, insbesondere im 90°-Winkel, steht und an diese angrenzt. Die Axialringnut weist eine Seitenwand auf, die winklig zu der Stirnwand steht, insbesondere in einem 90°-Winkel, und an diese angrenzt, beispielsweise unter Ausbildung eines Schenkels der Axialringnut. Diese Stirnwand bildet den Axialanschlag für den Einpressring. Der Einpressring bewirkt die Krafteinleitung demzufolge auf diesen Axialanschlag, so dass der Kraftverlauf vom Einpressring in die zweite Gehäusehülse erfolgt, und ein nennenswerter Krafteintrag in die erste Gehäusehülse beziehungsweise deren Ringflansch oder Krempelrand nicht auftritt und unerwünschte Auswirkungen auf deren Materialstruktur daher vorteilhaft vermieden werden.

In einer weiteren Ausführungsform ist vorgesehen, dass der Einpressring axial auf einer Ringstufe der Ventilaufnahme aufliegt. Durch dieses Aufliegen auf der Ringstufe, die in oder an der Ventilaufnahme ausgebildet ist, lässt sich ein definierter Ventilsitz in der Ventilaufnahme bewirken. Der Einpressring wird nämlich beim Einpressen des Ventils in Axialrichtung über die zweite Gehäusehülse in seiner Vorwärtsbewegung durch die Ringstufe begrenzt. Ein zu weites Einpressen wird so vorteilhaft vermieden.

Weiter ist in einer Ausführungsform vorgesehen, dass die Seitenwände der Axialringnut unterschiedlich hoch ausgebildet sind. Die Axialringnut ist demzufolge, im Schnitt betrachtet, nicht symmetrisch ausgebildet, sondern dergestalt, dass sie unterschiedlich hohe Seitenwände aufweist.

In einer Ausführungsform ist die innere Seitenwand der Axialringnut höher als die äußere Seitenwand der Axialringnut ausgebildet.

Weiter ist vorgesehen, dass die Ventilanordnung einem ABS-, TCS- und/oder ESP-System eines Kraftfahrzeugs angehört. Insbesondere bei solchen hydraulischen beziehungsweise elektrohydraulischen Systemen lassen sich derartige Ventilanordnungen besonders vorteilhaft und kostensparend einsetzen, wobei durch die beschriebene Ventilanordnung ein sehr hohes Maß an Zuverlässigkeit und Betriebssicherheit bei vereinfachter Herstellung gewährleistet ist.

Weitere vorteilhafte Ausführungsformen ergeben sich aus den Unteransprüchen und aus Kombinationen derselben.

Die Erfindung wird nachfolgend anhand von Ausführungsbeispielen näher erläutert, ohne aber hierauf beschränkt zu sein. Es zeigen
- Figur 1: ein Ventil mit einer einen nach außen weisenden Ringflansch aufweisenden ersten Gehäusehülse und
- Figur 2: ein Ventil mit einem nach außen gekehrten Krempelrand.

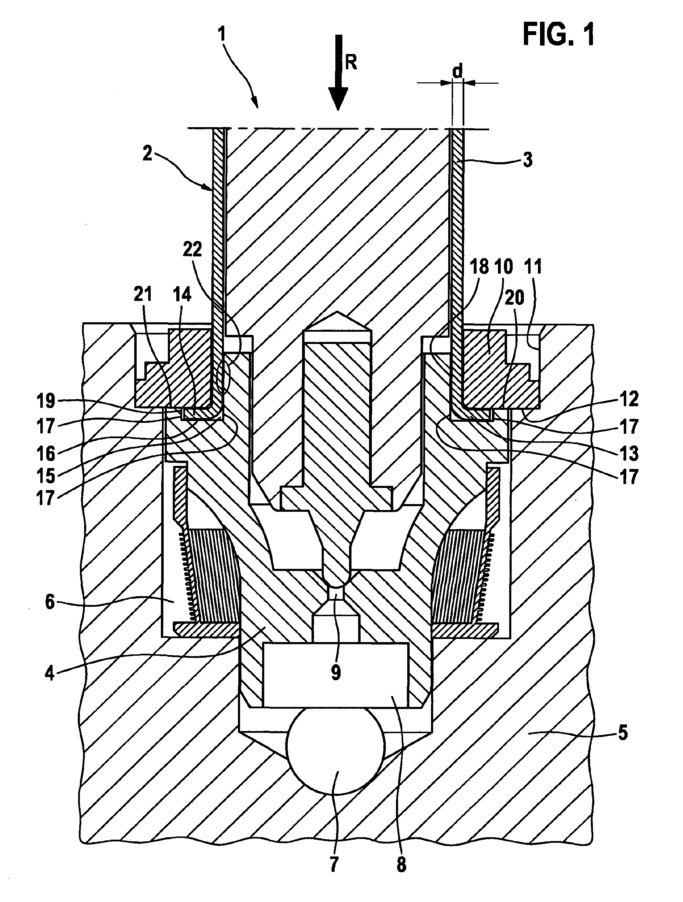

Figur 1 zeigt abschnittsweise in Längsschnittdarstellung ein Magnetventil 1, das ein zweiteiliges Gehäuse 2 aufweist, wobei das Gehäuse 2 von einer ersten Gehäusehülse 3 und einer sich an diese in Axialrichtung anschließenden zweiten Gehäusehülse 4 gebildet ist. Das Magnetventil 1 ist hier in seiner Einbaulage in einem Pumpengehäuse 5 einer Hydraulikeinheit eines Kraftfahrzeugs dargestellt. Das Pumpengehäuse 5 weist zur Aufnahme des Magnetventils 1 eine Ventilaufnahme 6 auf, die mit einem Hydraulikkanal 7 kommuniziert und wobei das Magnetventil 1 in Axialrichtung R in die Ventilaufnahme 6 dergestalt eingesetzt ist, dass eine in der zweiten Gehäusehülse 4 stirnseitig eingebrachte Zutrittsöffnung 8 für das Medium, die mit einem in Axialerstreckung des Magnetventils 1 anschließenden Ventilsitz 9 kommuniziert, in den Bereich des Hydraulikkanals 7 hineinragt. Das Magnetventil 1 wird in der dargestellten Einbaulage von einem das Magnetventil 1 axial beaufschlagenden Einpressring 10 am Pumpengehäuse 5 gehalten, der sich an der zweiten Gehäusehülse 4 des Magnetventils in Axialrichtung und an der ersten Gehäusehälfte 3 des Magnetventils 1 in Radialrichtung abstützt. Der Einpressring 10 stützt sich weiter an einer Innenwand 11 der Ventilaufnahme 6 und in Axialrichtung an einer Ventilaufnahmenringstufe 12 ab. Die erste Gehäusehülse 3 weist an ihrem der zweiten Gehäusehälfte 4 zugewandten Ende 13 einen umlaufenden Ringflansch 14 auf, der in einer in der zweiten Gehäusehülse 4 umlaufenden, der ersten Gehäusehülse 3 zugewandten Axialringnut 15 einliegt. Die Axialringnut 15 weist einen Nutgrund 16 und Seitenwände 17 auf, wobei eine innere Seitenwand 18 höher als eine äußere Seitenwand 19 der Axialringnut 15 ausgebildet ist. Die äußere Seitenwand 17 wird oberseitig radial auswärts von einer Stirnwand 20 begrenzt. Die Stirnwand 20 steht hierbei im rechten Winkel (in einem 90°-Winkel) zu der äußeren Seitenwand 19. Die Stirnwand 20 wird in Axialrichtung von dem Einpressring 10 beaufschlagt, wobei die Stirnwand 20 einen Axialanschlag 21 bildet. Der Axialanschlag 21 dient hierbei beim Einpressen des Magnetventils 1 in die Ventilaufnahme 6 mittels des Einpressrings 10 der Krafteinleitung in das Magnetventil 1 über die zweite Gehäusehülse 4. Die erste Gehäusehülse 3 wird hierbei nicht oder nur in geringem Umfang (nämlich durch allfälligen, unvermeidlichen Reibschluss) in Axialrichtung R kraftbeaufschlagt, sodass im Bereich der Verbindung von erster Gehäusehülse 3 und zweiter Gehäusehülse 4, nämlich in einer Befestigungszone 22, in der die erste Gehäusehülse 3 und die zweite Gehäusehülse 4 aneinander beispielsweise durch Verpressen vor Einbau in die Ventilaufnahme 6 gehalten sind, ein unerwünschter Krafteintrag nicht erfolgt; im Bereich der Befestigungszone 22 erfolgt lediglich ein Anliegen des Einpressrings 10 an der ersten Gehäusehülse in radialer Richtung. Auf diese Weise werden unerwünschte Verformungen oder Beeinträchtigungen des Gehäuses 2 im Bereich der Befestigungszone 22 beim Einpressen über den Einpressring 10 vermieden, da für das Einpressen mittels des Einpressrings 10 in die Ventilaufnahme 6 erhebliche Kräfte in das Magnetventil 1 eingetragen werden müssen. Diese werden in vorliegender Ausführungsform aber in Axialrichtung R lediglich über den Axialanschlag 21 eingetragen, sodass eine zuverlässige, gleichwirkende Krafteintragung ohne Beeinträchtigung der Befestigungszone 22 möglich ist. Um dies zu gewährleisten, ist die äußere Seitenwand 19 so hoch ausgebildet, dass sie eine Materialstärke d der ersten Gehäusehülse 3 im Bereich des Ringflansches 14 entweder geringfügig übersteigt, sodass der Ringflansch 14 selbst, der in der Axialringnut 15 einliegt, keine oder keine nennenswerte Kraftbeaufschlagung in Axialrichtung R erfährt, oder aber dergestalt, dass der Ringflansch 14, der in der Axialringnut 15 einliegt, eine solche Kraftbeaufschlagung in Axialrichtung R erfährt, dass er in den Nutgrund 16 dichtend eingepresst wird. Auf diese Weise lässt sich zusätzlich eine umlaufende Abdichtung der ersten Gehäusehülse 3 an der zweiten Gehäusehülse 4 in Bereiche des Nutgrundes 16 und zwischen Ringflansch 14 und Einpressring 10 bewirken.

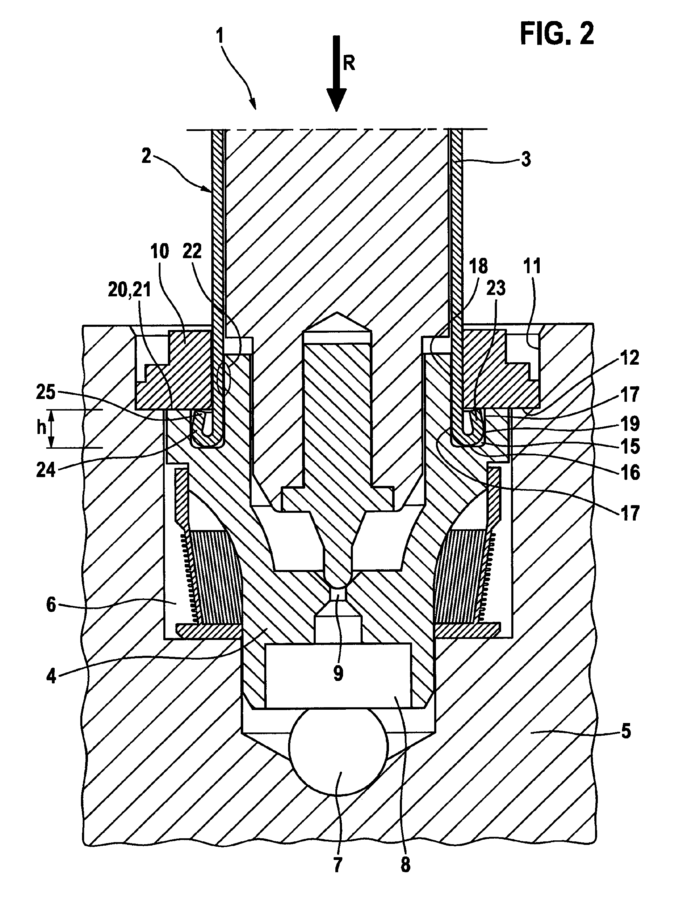

Figur 2 zeigt ein im Wesentlichen gleich ausgestaltetes Magnetventil 1, wie zu Figur 1 beschrieben, in seiner Einbaulage in dem Pumpengehäuse 5. Nachfolgend werden insoweit lediglich die Abweichungen in der konstruktiven Ausführung zu der in Figur 1 dargestellten Ausführung beschrieben. Abweichend zu der in Figur 1 dargestellten Ausführungsform weist die erste Gehäusehülse 3 nicht den in Figur 1 dargestellten Ringflansch 14 auf, sondern einen nach außen gekehrten Krempelrand 23. Der Krempelrand 23 liegt in der stirnseitig an der zweiten Gehäusehülse 4 umlaufenden Axialringnut 15 ein, die von dem Nutgrund 16 und von Seitenwänden 17 begrenzt wird, wobei die Seitenwände 17 zum Nutgrund 16 in einem rechten Winkel stehen und sich der Krempelrand 23 in Axialrichtung R am Nutgrund 16 abstützt. Der Krempelrand 23 ist hierbei im Schnitt betrachtet in Form einer nach außen gebogenen, oben offenen Öse 24 ausgebildet. Die Axialringnut weist eine innere Seitenwand 18 und eine äußere Seitenwand 19 auf, wobei die äußere Seitenwand 19 in Längserstreckung des Magnetventils 1 so hoch ausgebildet ist, dass sie eine Höhe h des Krempelrandes 23 in etwa erreicht oder der Krempelrand 23 die äußere Seitenwand 19 geringfügig aus der Axialringnut 15 heraus überragt. Die äußere Seitenwand 19 grenzt wiederum im 90°-Winkel an den von der Stirnwand 20 gebildeten Axialanschlag 21, der von dem Einpressring 10 in Axialrichtung R beaufschlagt wird und das Magnetventil 1 bei der Montage in die Ventilaufnahme 6 des Pumpengehäuses 5 einpresst und dort in Einbaulage hält. Überragt der Krempelrand 23 die äußere Seitenwand 19 geringfügig, so wird auch dessen Randende 25, das die äußere Seitenwand 19 auf den Einpressring 10 hin zu gerichtet überragt, kraftbeaufschlagt, sodass es zu einer Verformung des Krempelrands 23 kommt, die den Krempelrand 23 unter möglichst vollständiger Ausnutzung der Ausdehnung der Axialringnut 15 gegen den Nutgrund 16 und die Seitenwände 17 der Axialringnut 15 presst und dadurch eine aufgrund der Geometrie des Krempelrandes 23, nämlich unter Ausbildung einer (im Schnitt betrachtet) aufgeweiteten Öse 24, dessen Anlage an den Seitenwänden 17 und am Nutgrund 16 allseitig dichtend wirkt. Wiederum erfolgt die Krafteinleitung beim Einpressen des Magnetventils 1 in die Ventilaufnahme 6 des Pumpengehäuses 5 über den Einpressring 10 über den Axialanschlag 21, der an der zweiten Gehäusehülse 4 ausgebildet ist, und nicht im Bereich der Befestigungszone 22, in der die erste Gehäusehülse 3 und die zweite Gehäusehülse 4 aneinander gehalten sind. Auch hier wird wiederum sehr vorteilhaft eine durch Krafteinleitung beim Einpressen des Magnetventils 1 im Stand der Technik mögliche Verformung des Gehäuses 2 durch eine dort mögliche, unerwünschte Krafteinleitung im Bereich der Befestigungszone 22 vermieden.

## Patentansprüche

1. Ventilanordnung mit einem Ventil, insbesondere Magnetventil (1), das ein mindestens zweiteiliges Gehäuse (2) aufweist, welches eine erste Gehäusehülse (3) und eine zweite Gehäusehülse (4) besitzt, wobei die Gehäusehülsen (3,4) durch Verpressen einer Befestigungszone (22) aneinander gehalten sind, und mit einer Ventilaufnahme (6), in die das Ventil eingesetzt und mittels eines im Bereich der Befestigungszone (22) liegenden Einpressrings (10) gehalten ist, **dadurch gekennzeichnet, dass** der Einpressring (10) an der ersten Gehäusehülse (3) radial und an der zweiten Gehäusehülse (4) axial anliegt.

2. Ventilanordnung nach Anspruch 1, **dadurch gekennzeichnet, dass** die zweite Gehäusehülse (4) eine Axialringnut (15) aufweist, in die die erste Gehäusehülse (3) eingreift.

3. Ventilanordnung nach Anspruch 2, **dadurch gekennzeichnet, dass** die erste Gehäusehülse(3) mit einem nach außen weisenden Ringflansch (14) oder mit einem nach außen gekehrten Krempelrand (23) in die Axialringnut (15) der zweiten Gehäusehülse (4) eingreift.

4. Ventilanordnung nach Anspruch 3, **dadurch gekennzeichnet, dass** der Einpressring (10) den Ringflansch (14) oder den Krempelrand (23) axial beaufschlagt.

5. Ventilanordnung nach einem der vorhergehenden Ansprüche, **dadurch gekennzeichnet, dass** der Einpressring (10) auf einer einen Axialanschlag (21) bildenden Stirnwand (20) der zweiten Gehäusehülse (4) aufliegt, wobei die Stirnwand (20) zu einer Seitenwand (17) der Axialringnut (15) winklig, insbesondere im 90°-Winkel, steht und an diese angrenzt.

6. Ventilanordnung nach einem der vorhergehenden Ansprüche, **dadurch gekennzeichnet, dass** der Einpressring (10) axial auf einer Ringstufe (12) der Ventilaufnahme (6) aufliegt.

7. Ventilanordnung nach Anspruch 2, **dadurch gekennzeichnet, dass** die Seitenwände (17) der Axialringnut (15) unterschiedlich hoch ausgebildet sind.

8. Ventilanordnung nach Anspruch 7, **dadurch gekennzeichnet, dass** die innere Seitenwand (18) der Axialringnut (15) höher als die äußere Seitenwand (19) der Axialringnut (15) ausgebildet ist.

9. Ventilanordnung nach einem der vorhergehenden Ansprüche, **dadurch gekennzeichnet, dass** die Ventilanordnung einem ABS-, TCS- und/oder ESP-System eines Kraftfahrzeugs angehört.

## Claims

1. Valve assembly with a valve, in particular a solenoid valve (1), which comprises an at least two-part housing (2) that has a first housing sleeve (3) and a second housing sleeve (4), the housing sleeves (3, 4) being held against each other by compression of a fastening zone (22), and with a valve receptacle (6) in which the valve is inserted and held by means of a press-in ring (10) lying in the region of the fastening zone (22), **characterized in that** the press-in ring (10) lies radially against the first housing sleeve (3) and axially against the second housing sleeve (4).

2. Valve assembly according to Claim 1, **characterized in that** the second housing sleeve (4) has an axial ring groove (15) in which the first housing sleeve (3) engages.

3. Valve assembly according to Claim 2, **characterized in that** the first housing sleeve (3) engages with an outward pointing ring flange (14) or with an outward turned crimp edge (23) in the axial ring groove (15) of the second housing sleeve (4).

4. Valve assembly according to Claim 3, **characterized in that** the press-in ring (10) axially pressurizes the ring flange (14) or crimp edge (23).

5. Valve assembly according to any of the preceding claims, **characterized in that** the press-in ring (10) lies on a face wall (20) of the second housing sleeve (4), forming an axial stop (21), wherein the face wall (20) stands at an angle, in particular a 90° angle, to a side wall (17) of the axial ring groove (15) and abuts the latter.

6. Valve assembly according to any of the preceding claims, **characterized in that** the press-in ring (10) lies axially on a ring step (12) of the valve receptacle (6).

7. Valve assembly according to Claim 2, **characterized in that** the side walls (17) of the axial ring groove (15) are formed with different heights.

8. Valve assembly according to Claim 7, **characterized in that** the inner side wall (18) of the axial ring groove (15) is formed higher than the outer side wall (19) of the axial ring groove (15).

9. Valve assembly according to any of the preceding claims, **characterized in that** the valve assembly belongs to an ABS, TCS and/or ESP system of a motor vehicle.

## Revendications

1. Ensemble vanne comprenant une vanne, en particulier une électrovanne (1), qui comprend un boîtier (2) au moins en deux parties, lequel présente une première douille de boîtier (3) et une deuxième douille de boîtier (4), les douilles de boîtier (3, 4) étant maintenues l'une contre l'autre par compression d'une zone de fixation (22), et comprenant un logement de vanne (6) dans lequel la vanne est insérée et maintenue au moyen d'une bague de pressage (10) située dans la région de la zone de fixation (22), **caractérisé en ce que** la bague de pressage (10) s'applique radialement contre la première douille de boîtier (3) et axialement contre la deuxième douille de boîtier (4).

2. Ensemble vanne selon la revendication 1, **caractérisé en ce que** la deuxième douille de boîtier (4) comprend une rainure annulaire axiale (15) dans laquelle vient en prise la première douille de boîtier (3).

3. Ensemble vanne selon la revendication 2, **caractérisé en ce que** la première douille de boîtier (3) vient en prise, par un rebord annulaire (14) orienté vers l'extérieur ou par un bord replié (23) tourné vers l'extérieur, dans la rainure annulaire axiale (15) de la deuxième douille de boîtier (4).

4. Ensemble vanne selon la revendication 3, **caractérisé en ce que** la bague de pressage (10) sollicite axialement le rebord annulaire (14) ou le bord replié (23).

5. Ensemble vanne selon l'une quelconque des revendications précédentes, **caractérisé en ce que** la bague de pressage (10) repose sur une paroi frontale (20), formant une butée axiale (21), de la deuxième douille de boîtier (4), la paroi frontale (20) étant inclinée, en particulier d'un angle de 90°, par rapport à une paroi latérale (17) de la rainure annulaire axiale (15) et étant adjacente à celle-ci.

6. Ensemble vanne selon l'une quelconque des revendications précédentes, **caractérisé en ce que** la bague de pressage (10) repose axialement sur un gradin annulaire (12) du logement de vanne (6).

7. Ensemble vanne selon la revendication 2, **caractérisé en ce que** les parois latérales (17) de la rainure annulaire axiale (15) sont réalisées de manière à présenter une hauteur différente.

8. Ensemble vanne selon la revendication 7, **caractérisé en ce que** la paroi latérale intérieure (18) de la rainure annulaire axiale (15) est réalisée de manière à être plus élevée que la paroi latérale extérieure (19) de la rainure annulaire axiale (15).

9. Ensemble vanne selon l'une quelconque des revendications précédentes, **caractérisé en ce que** l'ensemble vanne appartient à un système ABS, TCS et/ou ESP d'un véhicule automobile.
